# EUROPEAN PATENT SPECIFICATION

(11) **EP 3 778 507 B1**
(45) Date of publication and mention of the grant of the patent: **25.02.2026**
(21) Application number: 19775281.9
(22) Date of filing: 04.03.2019
(51) Int. Cl.: C03C 3/32, C03C 4/10, G01J 1/04, G02B 1/00

(54) **CHALCOGENIDE GLASS MATERIAL**
CHALKOGENIDGLASMATERIAL
MATÉRIAU EN VERRE DE CHALCOGÉNURE

(30) Priority: 28.03.2018 JP 2018061107; 17.10.2018 JP 2018195700
(43) Date of publication of application: 17.02.2021
(73) Proprietor: Nippon Electric Glass Co., Ltd., Otsu-shi, Shiga 520-8639 (JP)
(72) Inventor: MATSUSHITA, Yoshimasa, Otsu-shi Shiga 520-8639 (JP); SATO, Fumio, Otsu-shi Shiga 520-8639 (JP)
(74) Representative: Tetzner, Michael
(86) International application number: PCT/JP2019/008471
(87) International publication number: WO 2019/188025

(56) References cited:
- EP-A1- 1 642 870
- WO-A1-2017/168939
- JP-A- 2017 057 110
- JP-A- 2017 178 674
- JP-A- S59 182 247
- JP-A- S62 265 105
- JP-A- S63 218 518
- JP-B1- S4 816 688
- US-A- 4 801 442

## Description

The present invention relates to a method for producing chalcogenide glass materials for use in infrared sensors, infrared cameras, and so on.

### [Background Art]

Vehicle-mounted night vision devices, security systems, and the like include infrared sensors for use to detect living bodies at night. To sense infrared rays with wavelengths of about 8 to 14 µm emitted from living bodies, such an infrared sensor is provided, in front of the sensor part, with an optical element, such as a filter or a lens, capable of transmitting infrared rays in the above wavelength range.

Examples of a material for the optical element as described above include Ge and ZnSe. These materials are crystalline bodies and therefore poor in processability, which makes them difficult to process into complicated shapes, such as an aspheric lens. For this reason, these materials have a problem of difficulty in mass production of the above optical element and also have a problem of difficulty in size reduction of the infrared sensor.

To cope with the above, chalcogenide glasses are proposed as vitreous materials that can transmit infrared rays with wavelengths of about 8 to 14 µm and are relatively easily processable (see, for example, JP 2009 161374 A).

JP 2017 178674 A and US 4 801 442 A disclose chalcogenide glass materials with an oxygen content of 100 ppm or less. JP S62 265105 A also discloses a chalcogenide glass material. EP 1 642 870 A1 discloses examples of chalcogenide glass materials containing Te and Ga.

### [Summary of Invention]

### [Technical Problem]

The glass described in JP 2009 161374 A has an infrared transmittance significantly decreasing at a wavelength of 10 µm or more and therefore makes an infrared sensor poor particularly in sensitivity to infrared rays emitted from living bodies, so that the infrared sensor may not sufficiently function.

In view of the foregoing, the present invention has an object of providing a method for producing a glass having excellent infrared transmittance and being suitable for use in infrared sensors.

### [Solution to Problem]

The inventors have conducted various studies, consequently have made the following findings, and have proposed the present invention based on the findings. A chalcogenide glass material is generally produced by loading raw materials into a quartz tube, evacuating the quartz tube, and then melting the raw materials in a sealed state. However, because the surfaces of the raw materials are oxidized even when the raw materials used have high purity, oxygen is mixed as an impurity into the glass and binds to components in the glass. As a result, the bonds have absorption peaks in the infrared range, so that the infrared transmittance is likely to decrease.

The present invention provides a method for producing a chalcogenide glass material according to claim 1. The method comprises the step of: a raw material batch is put into a quartz container, and while a reducing gas is introduced into the quartz container, the quartz container is raised in temperature to 650 to 1000°C at a rate of 10 to 40°C/hour in a melting furnace and then held for six to twelve hours.

The chalcogenide glass material prepared according to the present invention has an oxygen content of 100 ppm or less. Since the content of oxygen causing a decrease in infrared transmittance is restricted as described above, absorption in the infrared range is less likely to occur, so that the decrease in infrared transmittance can be reduced.

The chalcogenide glass material prepared according to the present invention preferably contains over 20 to 90% Te+S+Se.

The chalcogenide glass material prepared according to the present invention contains, in terms of % by mole, 20 to 90% Te and 2 to 40% Ga.

The chalcogenide glass material prepared according to the present invention preferably contains, in terms of % by mole, over 2 to 50% Ge+Ga+Sb+As.

The chalcogenide glass material prepared according to the present invention preferably contains, in terms of % by mole, 0 to 50% Ag.

The chalcogenide glass material prepared according to the present invention preferably contains, in terms of % by mole, 0 to 50% Si.

The chalcogenide glass material prepared according to the present invention is preferably free from striae with a length of 500 µm or more.

In the method for producing the chalcogenide glass material according to the present invention, the reducing gas is at least one selected from N₂-H₂ mixed gas, CO, H₂S, N₂O, SO₂, and NH₃.

### [Advantageous Effects of Invention]

The present invention enables provision of a chalcogenide glass material having excellent infrared transmittance and being suitable as an optical element for an infrared sensor.

### [Brief Description of Drawings]

[Fig. 1]

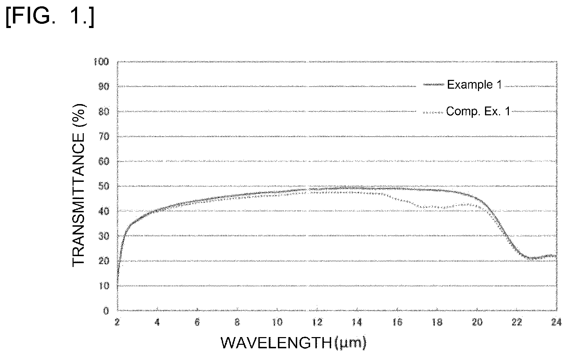

Fig. 1 is a graph showing infrared transmittance curves in Example 1 and Comparative Example 1.

### [Description of Embodiments]

A chalcogenide glass material prepared according to the present invention has an oxygen content of 100 ppm or less, preferably 50 ppm or less, more preferably 20 ppm or less, still more preferably 15 ppm or less, yet still more preferably 12 ppm or less, yet still more preferably 10 ppm or less, yet still more preferably 8 ppm or less, yet still more preferably 5 ppm or less, yet still more preferably 3 ppm or less, and particularly preferably 1 ppm or less. If the oxygen content is too large, absorption in the infrared range is likely to occur, so that the infrared transmittance is likely to decrease. The lower limit of the oxygen content is not particularly limited, but it is actually not less than 0.01 ppm.

The binding sites between oxygen and components in the glass are likely to cause changes in refractive index and form striae. However, since the chalcogenide glass material prepared according to the present invention has a small oxygen content, oxygen is less likely to bind to components in the glass and, therefore, striae are less likely to be formed. Specifically, the chalcogenide glass material prepared according to the present invention is preferably free from striae with a length of 500 µm or more. Even if there are striae in the chalcogenide glass material, their lengths are preferably less than 500 µm, more preferably 200 µm or less, still more preferably 100 µm or less, yet still more preferably 50 µm or less, and particularly preferably 10 µm or less. Thus, when the chalcogenide glass material is used as an optical element, the reduction in resolution of an image due to distortion or disturbance can be prevented.

Since the chalcogenide glass material prepared according to the present invention has a small oxygen content as described above, oxygen is less likely to bind to components in the glass. Specifically, Ge-O bonds (13.0 µm), Se-O bonds (11.0 µm), As-O bonds (12.7 µm), Si-O bonds (8.9 µm, 14.2 µm), Ga-O bonds (17.5 µm), and so on, which have absorption peaks in the infrared range, are less likely to be formed, so that the decrease in infrared transmittance can be easily reduced.

A description will be given below of the composition of the chalcogenide glass material prepared according to the present invention. Note that, in the following description of the respective contents of components, "%" refers to "% by mole" unless otherwise specified.

Te, S, and Se, which are chalcogen elements, are components that form the glass network. The content of Te+S+Se (total content of Te, S, and Se) is preferably over 0 to 100%, more preferably 20 to 90%, still more preferably 30 to 85%, yet still more preferably 40 to 85%, yet still more preferably 45 to 82%, yet still more preferably 50 to 80%, yet still more preferably 55 to 80%, yet still more preferably 60 to 80%, yet still more preferably 65 to 80%, and particularly preferably 70 to 80%. If the content of Te+S+Se is too small, vitrification becomes difficult. If the content of Te+S+Se is too large, the glass components are likely to evaporate during melting, which is likely to cause striae. From the perspective of reducing the occurrence of the above inconvenience, the content of Te+S+Se is preferably not more than 90%.

The respective preferred ranges of contents of Te, S, and Se are as described below.

Among Te, **S,** and Se, Te is most preferred because it can transmit infrared to a longer wavelength. The content of Te is 20 to 90%, preferably 30 to 88%, more preferably 40 to 85%, still more preferably 45 to 82%, yet still more preferably 50 to 80%, yet still more preferably 55 to 80%, yet still more preferably 60 to 80%, yet still more preferably 65 to 80%, and particularly preferably 70 to 80%. If the content of Te is too small, vitrification becomes difficult. On the other hand, if the content of Te is too large, Te-based crystals are likely to precipitate, so that the glass material is less likely to transmit infrared rays.

The content of S is preferably 0 to 90%, more preferably 10 to 90%, still more preferably 20 to 88%, yet still more preferably 30 to 85%, yet still more preferably 40 to 82%, yet still more preferably 50 to 80%, yet still more preferably 55 to 80%, yet still more preferably 60 to 80%, yet still more preferably 65 to 80%, and particularly preferably 70 to 80%.

The content of Se is preferably 0 to 90%, more preferably 10 to 90%, still more preferably 20 to 88%, yet still more preferably 30 to 85%, yet still more preferably 40 to 82%, yet still more preferably 50 to 80%, yet still more preferably 55 to 80%, yet still more preferably 60 to 80%, yet still more preferably 65 to 80%, and particularly preferably 70 to 80%.

Ge, Ga, Sb, and As are components that widen the vitrification range and increase the thermal stability of the glass (stability of vitrification). The content of Ge+Ga+Sb+As (total content of Ge, Ga, Sb, and As) is preferably over 0 to 50%, more preferably 10 to 45%, still more preferably 15 to 43%, yet still more preferably 20 to 43%, yet still more preferably 25 to 43%, and particularly preferably 30 to 43%. If the content of Ge+Ga+Sb+As is too small or too large, vitrification becomes difficult.

Furthermore, the content of Ge+Ga (total content of Ge and Ga) is preferably 0 to 40%, more preferably 2 to 35%, still more preferably 4 to 33%, yet still more preferably 4 to 30%, yet still more preferably 4 to 28%, and particularly preferably 4 to 25%. The content of Sb+As (total content of Sb and As) is preferably 0 to 45%, more preferably 5 to 40%, still more preferably 10 to 35%, yet still more preferably 15 to 35%, and particularly preferably 20 to 35%.

The respective preferred ranges of contents of Ge, Ga, Sb, and As are as described below.

The content of Ge is preferably 0 to 40%, more preferably 2 to 35%, still more preferably 4 to 33%, yet still more preferably 4 to 30%, yet still more preferably 4 to 28%, and particularly preferably 4 to 25%.

The content of Ga is 2 to 40%, more preferably 2 to 35%, still more preferably 4 to 33%, yet still more preferably 4 to 30%, yet still more preferably 4 to 28%, and particularly preferably 4 to 25%.

The content of Sb is preferably 0 to 45%, more preferably 5 to 40%, still more preferably 10 to 35%, yet still more preferably 15 to 35%, and particularly preferably 20 to 35%.

The content of As is preferably 0 to 45%, more preferably 5 to 40%, still more preferably 10 to 35%, yet still more preferably 15 to 35%, and particularly preferably 20 to 35%.

Ag is an essential component that increases the thermal stability of the glass (stability of vitrification). The content of Ag is preferably 0 to 50%, more preferably over 0 to 50%, still more preferably 1 to 45%, yet still more preferably 2 to 40%, yet still more preferably 3 to 35%, yet still more preferably 4 to 30%, yet still more preferably 5 to 25%, and particularly preferably 5 to 20%. If the content of Ag is too large, vitrification becomes difficult.

Si is an essential component that increases the thermal stability of the glass (stability of vitrification). The content of Si is preferably 0 to 50%, more preferably over 0 to 50%, still more preferably 1 to 45%, yet still more preferably 2 to 40%, yet still more preferably 3 to 35%, yet still more preferably 4 to 30%, yet still more preferably 5 to 25%, and particularly preferably 5 to 20%. If the content of Si is too large, infrared absorption due to Si is likely to occur, so that the glass material is less likely to transmit infrared rays.

Al, Ti, Cu, In, Sn, Bi, Cr, Sb, Zn, and Mn are components that increase the thermal stability of the glass (stability of vitrification) without decreasing the infrared transmission properties. The content of Al+Ti+Cu+In+Sn+Bi+Cr+Sb+Zn+Mn (total content of Al, Ti, Cu, In, Sn, Bi, Cr, Sb, Zn, and Mn) is preferably 0 to 40%, more preferably 2 to 35%, still more preferably 4 to 30%, and particularly preferably 5 to 25%. If the content of Al+Ti+Cu+In+Sn+Bi+Cr+Sb+Zn+Mn is too large, vitrification becomes difficult. The content of each of Al, Ti, Cu, In, Sn, Bi, Cr, Sb, Zn, and Mn is preferably 0 to 40%, more preferably 1 to 40%, still more preferably 1 to 30%, yet still more preferably 1 to 25%, and particularly preferably 1 to 20%. Of these, Al, Cu or Sn is preferably used in view of their particularly large effect of increasing the thermal stability of the glass.

F, Cl, Br, and I are also components that increase the thermal stability of the glass (stability of vitrification). The content of F+Cl+Br+I (total content of F, Cl, Br, and I) is preferably 0 to 40%, more preferably 2 to 35%, still more preferably 4 to 30%, and particularly preferably 5 to 25%. If the content of F+Cl+Br+I is too large, vitrification becomes difficult and the weather resistance is likely to decrease. The content of each of F, Cl, Br, and I is preferably 0 to 40%, more preferably 1 to 40%, still more preferably 1 to 30%, yet still more preferably 1 to 25%, and particularly preferably 1 to 20%. Of these, I is preferred because its elemental raw material can be used and it has a particularly large effect of increasing the thermal stability of the glass.

The chalcogenide glass material may contain, in addition to the above components, P, Pb, Tl, and so on without impairing the effects of the invention. Specifically, the content of each of these components is preferably 0 to 5% and particularly preferably 0 to 2%.

According to the present invention, the chalcogenide glass material is produced in the following manner. Raw materials are mixed to give the above glass composition, thus obtaining a raw material batch. Next, a quartz glass ampoule is evacuated with the application of heat, the raw material batch is then put into the quartz glass ampoule, and the quartz glass ampoule is sealed with an oxygen burner while a reducing gas is introduced into the quartz glass ampoule. Next, the sealed quartz glass ampoule is raised in temperature to 650 to 1000°C at a rate of 10 to 40°C/hour in a melting furnace and then held for six to twelve hours. During the holding time, the quartz glass ampoule is turned upside down as necessary to stir the melt. By melting the raw materials in the reducing gas as described above, oxygen in the raw materials is removed to make it likely that a low oxygen content glass is obtained. In this case, N₂-H₂ mixed gas, CO, H₂S, N₂O, SO₂, NH₃ or the like can be used as a reducing gas, but N₂-H₂ mixed gas is preferably used because of its inexpensiveness and high safety.

Then, the quartz glass ampoule is taken out of the melting furnace and rapidly cooled to room temperature in a reducing gas, thus obtaining a chalcogenide glass material.

When the interior of the melting furnace is kept in a reducing gas atmosphere, the melting can be performed without sealing the quarts glass ampoule, so that a low oxygen content glass can be continuously melted.

Alternatively, the molten glass may be bubbled with a reducing gas. The glass can be stirred by the bubbling, so that the homogenization of the glass can be promoted. As a result, the formation of striae can be reduced.

When the chalcogenide glass material obtained in the above manner is processed into a predetermined shape (such as a disc shape or a lenticular shape), an optical element can be produced.

For the purpose of increasing the transmittance, an antireflection film may be formed on one or both surfaces of the optical element. Examples of the method for forming the antireflection film include vacuum deposition, ion plating, and sputtering.

Alternatively, after the antireflection film is formed on the chalcogenide glass material, the chalcogenide glass material may be processed into the predetermined shape. However, for the reason that the antireflection film is likely to peel off in the processing step, the antireflection film is preferably formed after the chalcogenide glass material is processed into the predetermined shape, unless the circumstances are exceptional.

Since the chalcogenide glass material prepared according to the present invention has an excellent infrared transmittance, it is suitable as a cover member for protecting a sensor part of an infrared sensor or an optical element, such as a lens for focusing infrared light on the infrared sensor part of the infrared sensor.

### [Examples]

Hereinafter, the present invention will be described with reference to examples, but is not limited to the examples.

Tables 1 to 4 show Examples 1 to 9 and 12 to 26 of the present invention and Comparative Example 1 (Examples 10, 11, and 27 to 34 are outside of the present invention).

**[Table 1]**

| | | Example | | | | | | | | | |
|---|---|---|---|---|---|---|---|---|---|---|---|
| | | 1 | 2 | 3 | 4 | 5 | 6 | 7 | 8 | 9 | 10 |
| | Ge | 15 | 15 | 12.5 | 17.5 | 17.5 | 17.5 | 7.5 | 30 | 45 | 2.5 |
| | Ga | 5 | 7.5 | 7.5 | 5 | 2.5 | 22.5 | 32.5 | 15 | 10 | 45 |
| | Si | | | | | | | | | | |
| | Te | 80 | 77.5 | 80 | 77.5 | 80 | 60 | 60 | 55 | 45 | 52.5 |
| | S | | | | | | | | | | |
| Glass Composition (% by mole) | Se | | | | | | | | | | |
| | As | | | | | | | | | | |
| | Ag | | | | | | | | | | |
| | Sb | | | | | | | | | | |
| | Sn | | | | | | | | | | |
| | Bi | | | | | | | | | | |
| Oxygen Content (ppm) | | 0.2 | 0.1 | 0.3 | 0.2 | 0.4 | 0.2 | 0.1 | 0.3 | 0.2 | 0.3 |
| Absorption Peak | | Not found | Not found | Not found | Not found | Not found | Not found | Not found | Not found | Not found | Not found |
| Striae | | Not found | Not found | Not found | Not found | Not found | Not found | Not found | Not found | Not found | Not found |

**[Table 2]**

| | | Example | | | | | | | | | |
|---|---|---|---|---|---|---|---|---|---|---|---|
| | | 11 | 12 | 13 | 14 | 15 | 16 | 17 | 18 | 19 | 20 |
| | Ge | 20 | 25 | 35 | 5 | 10 | 22.5 | 5 | 40 | 42.5 | 10 |
| | Ga | 42.5 | 7.5 | 2.5 | 20 | 17.5 | 12.5 | 25 | 30 | 35 | 7.5 |
| | Si | | | | | | | | | | |
| | Te | 37.5 | 67.5 | 62.5 | 75 | 72.5 | 65 | 70 | 30 | 22.5 | 82.5 |
| | S | | | | | | | | | | |
| Glass Composition (% by mole) | Se | | | | | | | | | | |
| | As | | | | | | | | | | |
| | Ag | | | | | | | | | | |
| | Sb | | | | | | | | | | |
| | Sn | | | | | | | | | | |
| | Bi | | | | | | | | | | |
| Oxygen Content (ppm) | | 0.2 | 0.1 | 0.3 | 0.2 | 0.2 | 0.5 | 0.1 | 0.4 | 0.3 | 0.3 |
| Absorption Peak | | Not found | Not found | Not found | Not found | Not found | Not found | Not found | Not found | Not found | Not found |
| Striae | | Not found | Not found | Not found | Not found | Not found | Not found | Not found | Not found | Not found | Not found |

**[Table 3]**

| | | Example | | | | | | | | | |
|---|---|---|---|---|---|---|---|---|---|---|---|
| | | 21 | 22 | 23 | 24 | 25 | 26 | 27 | 28 | 29 | 30 |
| | Ge | 10 | 7.5 | 15 | 15 | 15 | 15 | 5 | 5 | | 22 |
| | Ga | 5 | 5 | 5 | 5 | 5 | 5 | | | 8 | |
| | Si | | | 2.5 | 5 | | | | | | |
| | Te | 85 | 87.5 | 77.5 | 75 | 77.5 | 75 | | | | |
| | S | | | | | | | 61 | 60 | 59 | |
| Glass Composition (% by mole) | Se | | | | | | | | | | 58 |
| | As | | | | | | | | | | 20 |
| | Ag | | | | | 2.5 | 5 | | | | |
| | Sb | | | | | | | 33 | 30 | 28 | |
| | Sn | | | | | | | | 5 | 5 | |
| | Bi | | | | | | | 1 | | | |
| Oxygen Content (ppm) | | 0.3 | 0.2 | 0.2 | 0.2 | 0.3 | 0.1 | 1.2 | 1.4 | 1.2 | 0.8 |
| Absorption Peak | | Not found | Not found | Not found | Not found | Not found | Not found | Not found | Not found | Not found | Not found |
| Striae | | Not found | Not found | Not found | Not found | Not found | Not found | Not found | Not found | Not found | Not found |

**[Table 4]**

| | | Example | | | | | Comparative Example |
|---|---|---|---|---|---|---|---|
| | | **31** | **32** | **33** | **34** | **35** | **1** |
| | **Ge** | **30** | **28** | | | **15** | **15** |
| | **Ga** | | | | | **5** | **5** |
| | **Si** | | | | | | |
| | **Te** | **25** | | | | **80** | **80** |
| | **S** | | | | **60** | | |
| Glass Composition (% by mole) | **Se** | **32** | **60** | **60** | | | |
| | **As** | **13** | | **40** | **40** | | |
| | **Ag** | | | | | | |
| | **Sb** | | **12** | | | | |
| | **Sn** | | | | | | |
| | **Bi** | | | | | | |
| Oxygen Content (ppm) | | **0.7** | **0.6** | **0.6** | **0.9** | **0.1** | **123** |
| Absorption Peak | | Not found | Not found | Not found | Not found | Not found | Found **(17.5 *µ*m)** |
| Striae | | Not found | Not found | Not found | Not found | Not found | Found |

Samples in Examples 1 to 34 were produced in the following manner. A quartz glass ampoule was evacuated with the application of heat and a raw material batch obtained by formulating raw materials to give each of the glass compositions shown in the tables was then put into the quartz glass ampoule. Next, the quartz glass ampoule was sealed with an oxygen burner while N₂-H₂ gas was introduced into the quartz glass ampoule. Subsequently, the sealed quartz glass ampoule was raised in temperature to 650 to 1000°C at a rate of 10 to 40°C/hour in a melting furnace and then held for six to twelve hours. During the holding time, the quartz glass ampoule was turned upside down to stir the melt. Then, the quartz glass ampoule was taken out of the melting furnace and rapidly cooled to room temperature, thus obtaining a sample.

A sample in Example 35 was produced in the following manner. A raw material batch obtained by formulating raw materials to give the glass composition shown in the table was put into a quartz glass ampoule. Next, the unsealed quartz glass ampoule was raised in temperature to 750°C at a rate of 40°C/hour in a melting furnace into which N₂-H₂ gas was introduced, and then held for six hours. Then, the quartz glass ampoule was taken out of the melting furnace and rapidly cooled to room temperature, thus obtaining a sample.

In Comparative Example 1, a sample was produced in the same manner as in Example 1 except that N₂-H₂ gas was not introduced into the quarts glass ampoule.

The obtained samples were measured in terms of oxygen content with an oxygen analyzer (ONH836 by LECO Japan Corporation). Furthermore, the samples were measured in terms of infrared transmittance at a thickness of 2 mm to check for absorption peak in the infrared range. Moreover, the obtained samples were internally observed by a shadow graph technique using infrared light with a wavelength of 10 µm to check for striae with a length of 500 µm or more. The results are shown in Tables 1 to 4. Furthermore, the infrared transmittance curves in Example 1 and Comparative Example 1 are shown in Fig. 1.

As is obvious from Tables 1 to 4 and Fig. 1, the samples in Examples 1 to 35 had small oxygen contents of 0.1 to 1.4 ppm and exhibited no absorption peak in the infrared range. Furthermore, the samples were found to form no stria with a length of 500 µm or more and had excellent homogeneity.

In contrast, the sample in Comparative Example 1 had an oxygen content of 123 ppm and exhibited an absorption peak at around 17.5 µm. In light of the position of the absorption peak, the absorption peak can be attributed to Ga-O bonds. Furthermore, striae with a length of 500 µm or more were found in the sample.

### [Industrial Applicability]

The infrared transmitting glass prepared according to the present invention is suitable as a cover member for protecting a sensor part of an infrared sensor or an optical element, such as a lens for focusing infrared light on the sensor part.

## Claims

1. A method for producing a chalcogenide glass material having an oxygen content of 100 ppm or less, wherein the chalcogenide glass material contains, in terms of % by mole, 20 to 90% Te and 2 to 40% Ga,
the method comprising the step of:
a raw material batch is put into a quartz container, and while a reducing gas is introduced into the quartz container, the quartz container is raised in temperature to 650 to 1000°C at a rate of 10 to 40°C/hour in a melting furnace and then held for six to twelve hours.

2. The method for producing a chalcogenide glass material according to claim 1, the chalcogenide glass material containing, in terms of % by mole, over 20 to 90% Te+S+Se as a composition.

3. The method for producing a chalcogenide glass material according to claim 1 or 2, the chalcogenide glass material containing, in terms of % by mole, over 2 to 50% Ge+Ga+Sb+As.

4. The method for producing a chalcogenide glass material according to any one of claims 1 to 3, the chalcogenide glass material containing, in terms of % by mole, 0 to 50% Ag.

5. The method for producing a chalcogenide glass material according to any one of claims 1 to 4, the chalcogenide glass material containing, in terms of % by mole, 0 to 50% Si.

6. The method for producing a chalcogenide glass material according to any one of claims 1 to 5, wherein the chalcogenide glass material is free from striae with a length of 500 µm or more.

7. The method for producing the chalcogenide glass material according to any one of claims 1 to 6, wherein the reducing gas is at least one selected from N₂-H₂ mixed gas, CO, H₂S, N₂O, SO₂, and NH₃.

## Patentansprüche

1. Verfahren zur Herstellung eines Chalkogenidglasmaterials mit einem Sauerstoffgehalt von 100 ppm oder weniger, wobei das Chalkogenidglas in Mol- % 20 bis 90 % Te und 2 bis 40 % Ga enthält, das umfassend die Schritte:
eine Rohmaterialcharge wird in einen Quarzbehälter gegeben und während ein Reduktionsgas in den Quarzbehälter eingeleitet wird, wird der Quarzbehälter in einem Schmelzofen mit einer Heizrate von 10 bis 40 °C/h auf 650 bis 1000 °C erhitzt und anschließend sechs bis zwölf Stunden lang auf dieser Temperatur gehalten.

2. Verfahren zur Herstellung eines Chalkogenidglasmaterials nach Anspruch 1, wobei das Chalkogenidglas in Mol-% mehr als 20 bis 90 % Te+S+Se enthält.

3. Verfahren zur Herstellung eines Chalkogenidglasmaterials nach Anspruch 1 oder 2, wobei das Chalkogenidglasmaterial in Mol-% mehr als 2 bis 50 % Ge+Ga+Sb+As enthält.

4. Verfahren zur Herstellung eines Chalkogenidglasmaterials nach einem der Ansprüche 1 bis 3, wobei das Chalkogenidglasmaterial in Mol-% 0 bis 50 % Ag enthält.

5. Verfahren zur Herstellung eines Chalkogenidglasmaterials nach einem der Ansprüche 1 bis 4, wobei das Chalkogenidglasmaterial in Mol-% 0 bis 50 % Si enthält.

6. Verfahren zur Herstellung eines Chalkogenidglasmaterials nach einem der Ansprüche 1 bis 5, wobei das Chalkogenidglasmaterial frei von Schlieren mit einer Länge von 500 µm oder mehr ist.

7. Verfahren zur Herstellung des Chalkogenidglasmaterials nach einem der Ansprüche 1 bis 6, wobei es sich bei dem Reduktionsgas mindestens um eines der folgenden Gase handelt: N₂, H₂, Mischgas, CO, H₂S, N₂O, SO₂ und NH₃.

## Revendications

1. Procédé de production d'un matériau en verre de chalcogénure ayant une teneur en oxygène de 100 ppm ou moins, procédé dans lequel le matériau en verre de chalcogénure contient, en termes de % par mole, de 20 % à 90 % de Te et de 2 % à 40 % de Ga,
le procédé comprenant l'étape au cours de laquelle :
un lot de matière première est placé dans un récipient en quartz, et pendant qu'un gaz réducteur est introduit dans le récipient en quartz, la température du récipient en quartz, qui est augmentée, passant de 650°C à 1000°C à un rythme compris entre 10°C et 40°C/heure dans un four de fusion, est maintenue ensuite pendant six à douze heures.

2. Procédé de production d'un matériau en verre de chalcogénure selon la revendication 1, le matériau en verre de chalcogénure contenant, en termes de % par mole, plus de 20 % à 90 % de Te + S + Se en tant que composition.

3. Procédé de production d'un matériau en verre de chalcogénure selon la revendication 1 ou 2, le matériau en verre de chalcogénure contenant, en termes de % par mole, plus de 2 % à 50 % de Ge + Ga + Sb + As.

4. Procédé de production d'un matériau en verre de chalcogénure selon l'une quelconque des revendications 1 à 3, le matériau en verre de chalcogénure contenant, en termes de % par mole, de 0 % à 50 % d'Ag.

5. Procédé de production d'un matériau en verre de chalcogénure selon l'une quelconque des revendications 1 à 4, le matériau en verre de chalcogénure contenant, en termes de % par mole, de 0 % à 50 % de si.

6. Procédé de production d'un matériau en verre de chalcogénure selon l'une quelconque des revendications 1 à 5, où le matériau en verre de chalcogénure est exempt de stries d'une longueur de 500 µm ou plus.

7. Procédé de production du matériau en verre de chalcogénure selon l'une quelconque des revendications 1 à 6, dans lequel le gaz réducteur est au moins un de ceux sélectionné parmi un mélange gazeux N₂-H₂, parmi des gaz tels que CO, H₂S, N₂O, SO₂ et NH₃.
